# EUROPEAN PATENT SPECIFICATION

(11) **EP 4 163 509 B1**
(45) Date of publication and mention of the grant of the patent: **20.11.2024**
(21) Application number: 22198231.7
(22) Date of filing: 28.09.2022
(51) Int. Cl.: F16D 48/10

(54) **CLUTCH CONTROL DEVICE**
KUPPLUNGSSTEUERUNGSVORRICHTUNG
DISPOSITIF DE COMMANDE D'EMBRAYAGE

(30) Priority: 30.09.2021 JP 2021160345
(43) Date of publication of application: 12.04.2023
(73) Proprietor: HONDA MOTOR CO., LTD., Minato-ku Tokyo 107-8556 (JP)
(72) Inventor: TSUKADA, Yoshiaki, 107-8556 Tokyo (JP); ONO, Junya, 107-8556 Tokyo (JP); OZEKI, Takashi, 107-8556 Tokyo (JP); FURUSATO, Koichi, 107-8556 Tokyo (JP); KAIBE, Yuma, 107-8556 Tokyo (JP); TSUZUKI, Ryohei, 107-8556 Tokyo (JP); FUJIMOTO, Yasushi, 107-8556 Tokyo (JP); RYUZAKI, Tatsuya, 107-8556 Tokyo (JP)
(74) Representative: Kiwit, Benedikt

(56) References cited:
- EP-A1- 3 044 472
- EP-B1- 3 044 472
- DE-A1- 102005 029 587
- DE-A1- 102007 034 202
- US-A1- 2004 143 383
- US-B2- 10 358 030

## Description

### BACKGROUND OF THE INVENTION

### Field of the Invention

The present invention relates to a clutch control device.

### Description of Related Art

In saddle riding vehicles in recent years, an automatic clutch system in which a connection/disconnection operation of a clutch apparatus is automatically performed by electric control has been proposed. For example, Japanese Utility Model Application JPH 05- 82643 U discloses a technology of operating a clutch connection amount to avoid an engine stall on the basis of a brake operation amount, a vehicle speed and an engine rotational speed.

The EP 3 044 472 A1 shows a method of controlling a clutch mounted between the output shaft of an engine and the input shaft of a motor vehicle gearbox. A pedal is applied for actuating the clutch. The pedal is movable between a rest position and an extreme depressed position. A sensor associated with the pedal delivers a pedal position signal. An actuator actuates the clutch between an engaged position and a disengaged position. A control unit controls the actuator as a function of the pedal position signal in a manual control mode, and in at least one assistance mode the actuator is automatically controlled while pedal remains in its rest position. For authorizing a switching from manual driving mode to assistance mode, driving conditions of the vehicle is analyzed in order to detect characteristic driving conditions. The position signal of the clutch actuation pedal is analyzed to detect whether the pedal is in the rest position. The assistance mode, in which the actuator is automatically piloted towards the disengaged position of the clutch in response to the detection of characteristic driving conditions and the rest position of the pedal, is activated in a further step. When the activated assistance mode is a freewheeling mode, the actuator is controlled to move the clutch to a disengaged position in which torque transmission between the engine output shaft and the transmission input shaft is interrupted, and a command to shut down the engine is generated when torque transmission is interrupted.

The US 2004/ 143 383 A1 shows a method for controlling and regulating a torque transmission system in a drivetrain of a vehicle, in which a clutch torque is changed as a function of a starting resistance of the vehicle in order to implement a strategy for starting the vehicle. A progression, i.e. the profile or curve, of the clutch torque is adjusted to a starting situation. The progression of the clutch torque is defined by at least one operating parameter. One operating parameter may determine how rapidly the clutch torque is to be built up after a predetermined maximum and/or target engine speed has been achieved. If the vehicle is to drive over a curb or the like, the clutch torque may be built up relatively rapidly in the method according to the present invention. This is because a dynamic component of the engine torque is advantageously exploited in this way. The said method may have a starting aid routine. In this case, the use of a multistage starting aid routine is to adapt the drivetrain to an existing starting resistance of the vehicle. The starting aid routine is integrated in an electronic clutch management (ECM) of the vehicle.

The DE 10 2007 034 202 A1 shows a method for controlling a drive train of a vehicle which has a drive engine and at least one clutch and/or transmission actuated by means of an actuator. The actuator is controlled by means of a control device as a function of sensor signals detecting operating parameters of the vehicle. An acceleration sensor detects a vehicle longitudinal acceleration, which is used for various control and/or regulation processes of the drive train of the vehicle. The torque to be transmitted by the clutch is determined using a certain updated vehicle mass, the estimated and/or currently detected output signal of the acceleration sensor, as well as the driving resistance force on a level road surface and the current transmission ratio and a friction torque between the clutch and the driven vehicle wheels.

The US 10 358 030 B2 shows a method for controlling a drive train of a vehicle which has a drive engine and at least one clutch and/or transmission actuated by means of an actuator. The actuator is controlled by means of a control device as a function of sensor signals detecting operating parameters of the vehicle. An acceleration sensor detects a vehicle longitudinal acceleration, which is used for various control and/or regulation processes of the drive train of the vehicle. The torque to be transmitted by the clutch is determined using a certain updated vehicle mass, the estimated and/or currently detected output signal of the acceleration sensor, as well as the driving resistance force on a level road surface and the current transmission ratio and a friction torque between the clutch and the driven vehicle wheels.

The DE 10 2005 029587 A1 shows
a method for controlling a drive train of a motor vehicle comprising a drive engine, a clutch actuated by a clutch actuator and a transmission. The clutch actuator is controlled by an electronic control unit as a function of sensor signals. One of the operating parameters relevant for the control of the clutch is determined by using the output signal of an acceleration sensor for detecting the vehicle acceleration. A gradient angle of the road on which the vehicle is traveling is determined from the change in at least one wheel speed over time and the signal from the acceleration sensor. With the propulsive force applied to the vehicle by the drive motor, the vehicle mass is determined from the driving resistance force on a level roadway and the roadway gradient. With the vehicle mass as well as the current road gradient, an automatic gear selection takes place in the control of an automatic transmission in the drivetrain and the corresponding actuation of the clutch.

### SUMMARY OF THE INVENTION

Incidentally, for example, during rough road traveling of a vehicle, when the vehicle rides over unevenness of a road surface or passes through a boundary between an unpaved road and a paved road, a large change occurs in a reaction force received by a driving wheel from the road surface, and an input torque (a clutch torque) to the clutch apparatus largely varies. Here, if the clutch capacity remains high, a large shock may be applied to a power unit or the like due to the input from the road surface. On the contrary, if the clutch capacity remains low, direct controllability may be affected.

The present invention is defined by the appended claims.

### BRIEF DESCRIPTION OF THE DRAWINGS

FIG. 1 is a right side view of a motorcycle of an embodiment.
FIG. 2 is a cross-sectional view of a gearbox and a change mechanism of the motorcycle.
FIG. 3 is a block diagram of a gear shift system of the motorcycle.
FIG. 4 is a view for describing transition of a clutch control mode of the motorcycle.
FIG. 5 is a view along an arrow V of FIG. 1 when seen in an axial direction of a clutch actuator.
FIG. 6 is a deployed cross-sectional view in the axial direction of the clutch actuator.
FIG. 7 is a perspective view of a release shaft configured to actuate a clutch apparatus.
FIG. 8 is a cross-sectional view along line VIII-VIII of FIG. 7.
FIG. 9A is a cross-sectional view corresponding to FIG. 8 showing an action in a half clutch region of the release shaft, upon driving by the clutch actuator.
FIG. 9B is a cross-sectional view corresponding to FIG. 8 showing an action in a half clutch region of the release shaft, upon manual intervention.
FIG. 10A is a cross-sectional view corresponding to FIG. 8 showing an action of the release shaft at a standby position, upon driving by the clutch actuator.
FIG. 10B is a cross-sectional view corresponding to FIG. 8 showing an action of the release shaft at the standby position, upon manual intervention.
FIG. 11 is a cross-sectional view corresponding to FIG. 6 in a state in which the clutch actuator is attached to a right cover.
FIG. 12 is a graph showing characteristics of clutch control, a vertical axis of which shows an output value of the clutch actuator and a horizontal axis of which shows an operation quantity of a release mechanism.
FIG. 13 is a graph corresponding to FIG. 12 showing an action of the embodiment.
FIG. 14 is a block diagram schematically showing a clutch control device.
FIG. 15 is a time chart showing a variation of a parameter during clutch capacity control.
FIG. 16 is a flowchart showing processing of clutch capacity control.

### DETAILED DESCRIPTION OF THE INVENTION

Hereinafter, an embodiment of the present invention will be described with reference to the accompanying drawings. Further, directions of forward, rearward, leftward, rightward, and so on, in the following description are the same as directions in a vehicle described below unless the context clearly indicates otherwise. In addition, in appropriate places in the drawings used in the following description, an arrow FR indicates a forward direction with respect to a vehicle, an arrow LH indicates a leftward direction with respect to the vehicle, and an arrow UP indicates an upward direction with respect to the vehicle.

### <Entire vehicle>

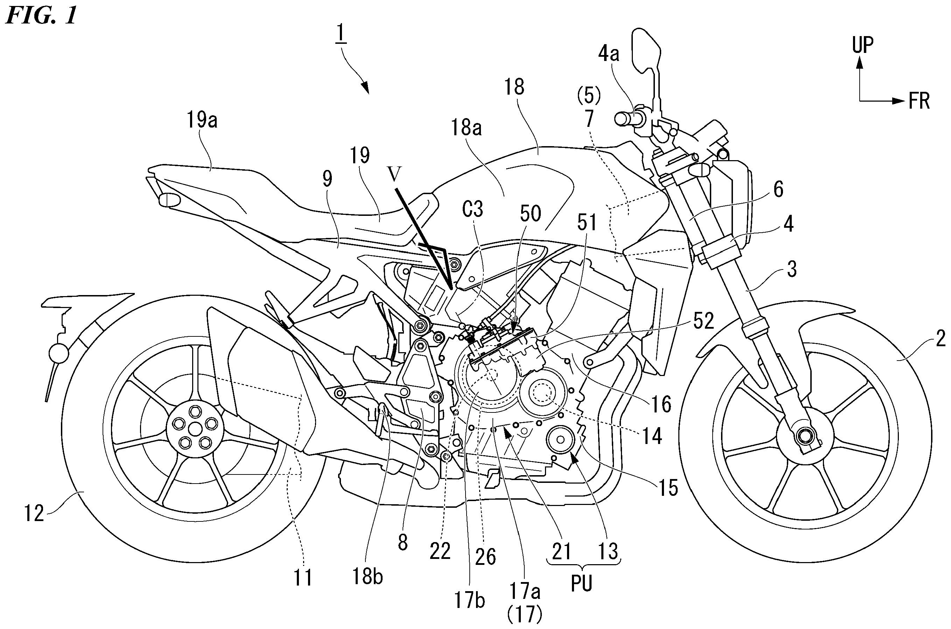

As shown in FIG. 1, the embodiment is applied to a motorcycle 1 as an example of a saddle riding vehicle. A front wheel 2 of the motorcycle 1 is supported by lower end portions of a pair of left and right front forks 3. Upper sections of the left and right front forks 3 are supported by a head pipe 6 of a front end portion of a vehicle body frame 5 via a steering stem 4. A bar type steering handle 4a is attached onto a top bridge of the steering stem 4.

The vehicle body frame 5 includes the head pipe 6, a main frame 7 extending downward and rearward from the head pipe 6 at a center in a vehicle width direction (leftward/rightward direction), a pivot frame 8 provided below a rear end portion of the main frame 7, and a seat frame 9 continuously provided behind the main frame 7 and the pivot frame 8. A front end portion of a swing arm 11 is swingably supported by the pivot frame 8. A rear wheel 12 of the motorcycle 1 is supported by a rear end portion of the swing arm 11.

A fuel tank 18 is supported above the left and right main frames 7. A front seat 19 and a rear seat 19a are supported behind the fuel tank 18 and above the seat frame 9. Knee grip portions 18a recessed inward in the vehicle width direction are formed at both left and right sides of a rear section of the fuel tank 18. The left and right knee grip portions 18a are formed to match inner sides around the left and right knees of a driver who is sitting on the front seat 19. A step 18b on which the driver rests the feet beyond the ankles is supported on both left and right sides below the front seat 19.

A power unit PU including a prime mover of the motorcycle 1 is suspended below the main frame 7. The power unit PU integrally has an engine (internal combustion engine, prime mover) 13 located in the front thereof, and a gearbox (output target) 21 located in the rear thereof. The engine 13 is, for example, a multi-cylinder engine in which a rotary shaft of a crankshaft 14 is provided in a leftward/rightward direction (vehicle width direction).

The engine 13 has a cylinder 16 that stands up above a front section of a crank case 15. A rear section of the crank case 15 is a gearbox case 17 configured to accommodate the gearbox 21. A right cover 17a crossing a right side portion of the gearbox case 17 is attached to a right side portion of the crank case 15. The right cover 17a is also a clutch cover configured to cover a clutch apparatus 26. The power unit PU is linked to the rear wheel 12 via, for example, a chain-type transmission mechanism (not shown).

### <Gearbox>

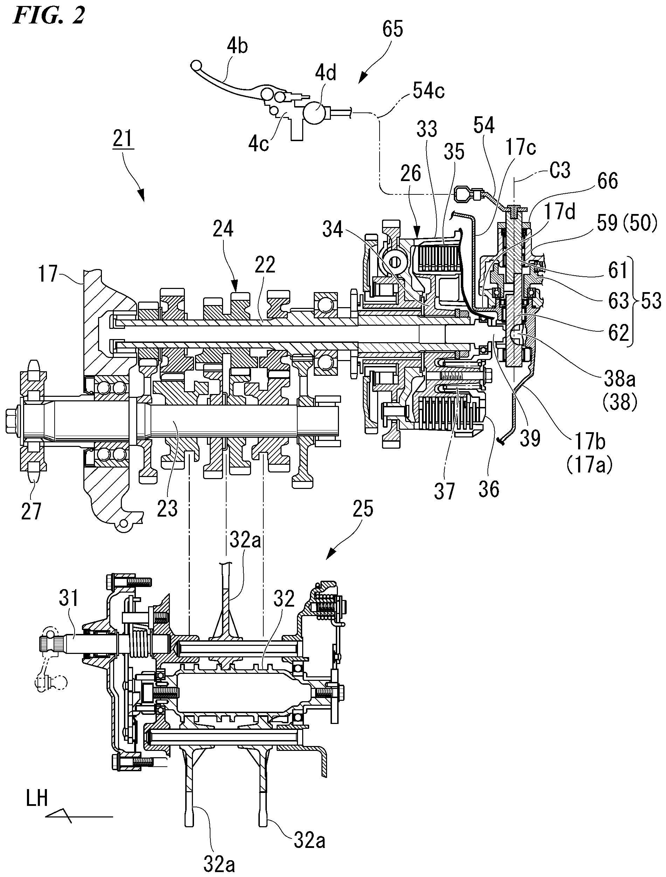

Referring also to FIG. 2, the gearbox 21 is a stepped transmission having a main shaft 22, a counter shaft 23, and a shifting gear group 24 that bridges between both of the shafts 22 and 23. The counter shaft 23 constitutes an output shaft of the gearbox 21 and the power unit PU. A left end portion of the counter shaft 23 protrudes on a left side of the rear section of the gearbox case 17 and is connected to the rear wheel 12 via the chain-type transmission mechanism.

The main shaft 22 and the counter shaft 23 of the gearbox 21 are disposed behind the crankshaft 14. The clutch apparatus 26 is disposed coaxially with the right end portion of the main shaft 22. The clutch apparatus 26 connects and disconnects power transmission between the crankshaft 14 of the engine 13 and the main shaft 22 of the gearbox 21. The connection/disconnection of the clutch apparatus 26 is actuated by at least one of an operation of the clutch operator by an occupant and an actuation of a clutch actuator 50, which will be described below. For example, the clutch operator is a clutch lever 4b.

The clutch apparatus 26 is, for example, a wet multiplate clutch, i.e., a so-called normally closed clutch. Rotating power of the crankshaft 14 is transmitted to the main shaft 22 via the clutch apparatus 26 and transmitted to the counter shaft 23 from the main shaft 22 via an arbitrary gear pair of the shifting gear group 24. A drive sprocket 27 of the chain-type transmission mechanism is attached to a left end portion of the counter shaft 23 protruding on the left side of the rear section of the crank case 15.

A change mechanism 25 configured to switch a gear pair of the shifting gear group 24 is accommodated in the gearbox case 17 in the vicinity of the gearbox 21. The change mechanism 25 actuates a plurality of shift forks 32a according to a pattern of a lead groove formed on an outer circumference thereof, and switches the gear pair used for power transmission between the shafts 22 and 23 in the shifting gear group 24, according to rotation of a hollow cylindrical shift drum 32 parallel to both of the shafts 22 and 23.

Here, the motorcycle 1 employs a so-called semi-automatic gear shift system (automatic clutch type gear shift system) in which only a gear shifting operation of the gearbox 21 (a foot operation of a shift pedal (not shown)) is performed by a driver, and a connection/disconnection operation of the clutch apparatus 26 is automatically performed under electric control according to the operation of the shift pedal.

### <Gear shift system>

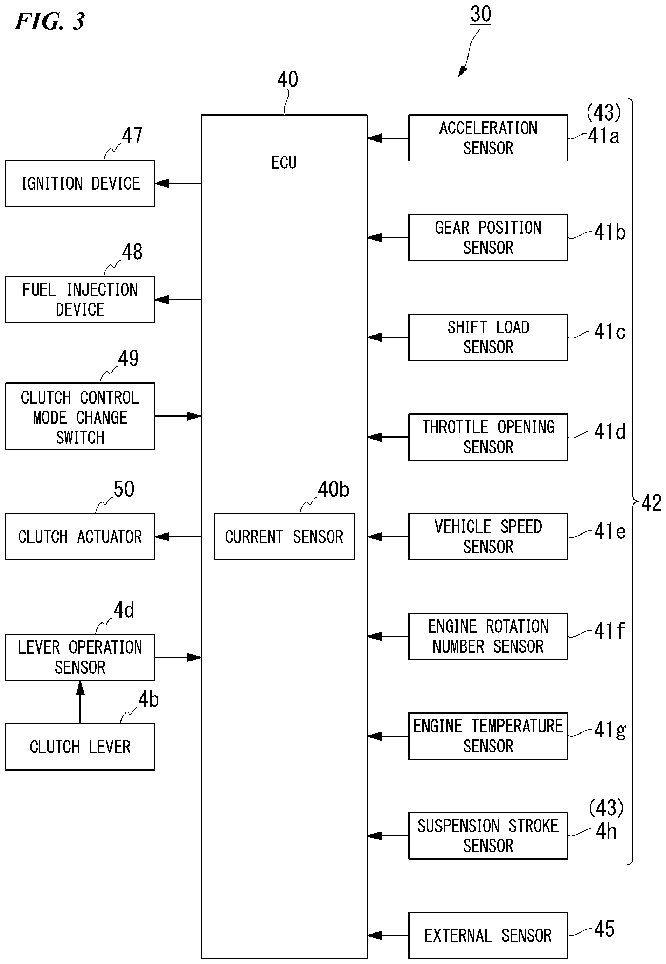

As shown in FIG. 3, the gear shift system 30 includes the clutch actuator 50, an electronic control unit 40 (ECU, a controller), various sensors 41a to 41j, and various devices 47, 48 and 50.

The ECU 40 controls an actuation of the clutch actuator 50 while controlling actuations of the ignition device 47 and the fuel injection device 48 on the basis of detection information of various vehicle states from the acceleration sensor 41a configured to detect a behavior of the vehicle body, the gear position sensor 41b configured to detect a gear shifting level from a rotation angle of the shift drum 32, the shift load sensor 41c (for example, a torque sensor) configured to detect an operation torque input to a shift spindle 31 (see FIG. 2) of the change mechanism 25, the throttle opening sensor 41d configured to detect a throttle opening, the vehicle speed sensor 41e configured to detect a vehicle speed, the engine rotational speed sensor 41f configured to detect an engine rotational speed, an engine temperature sensor 41g configured to detect an oil temperature and a water temperature of the engine 13, a suspension stoke sensor 41h configured to detect a stroke of front and rear suspensions and the like. The vehicle speed sensor 41 e may be a wheel speed sensor or may be a rotation speed sensor of the output shaft of the power unit PU.

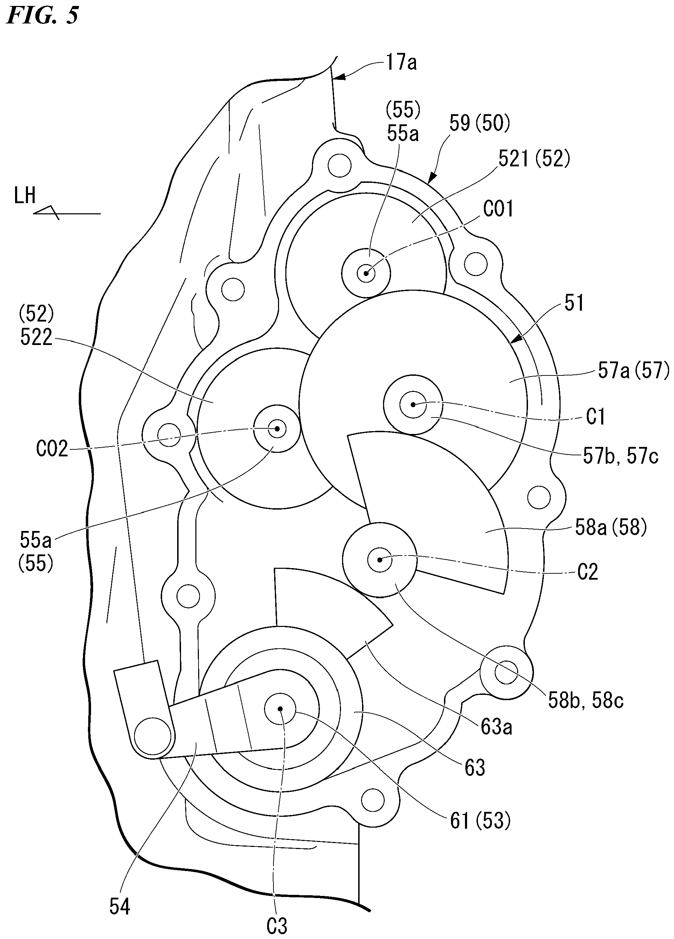

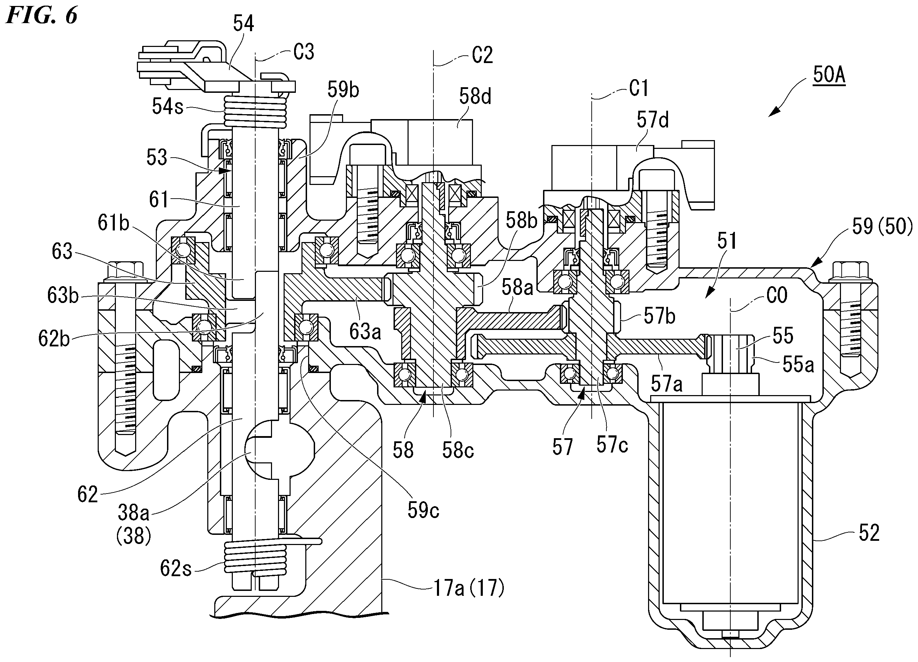

Referring also to FIG. 5 and FIG. 6, the clutch actuator 50 controls a working torque applied to a release shaft 53 in order to connect and disconnect the clutch apparatus 26. The clutch actuator 50 includes an electric motor 52 (hereinafter, simply referred to as the motor 52) as a driving source, and a speed reducer 51 configured to transmit a driving force of the motor 52 to the release shaft 53. The speed reducer 51 includes a first reduction shaft 57 and a second reduction shaft 58, and a first rotation angle sensor 57d and a second rotation angle sensor 58d configured to detect rotation angles are provided on the shafts 57 and 58, respectively.

The ECU 40 calculates a current value supplied to the motor 52 in order to connect and disconnect the clutch apparatus 26 on the basis of a preset calculation program. A supply current to the motor 52 is obtained from a correlation between the current value and the torque output to the motor 52. A target torque of the motor 52 is in proportion to a working torque (a release shaft torque, which will be described below) applied to the release shaft 53. The current value supplied to the motor 52 is detected by a current sensor 40b included in the ECU 40. The actuation of the clutch actuator 50 is controlled according to a variation of the detection value. The clutch actuator 50 will be described below in detail.

### <Clutch apparatus>

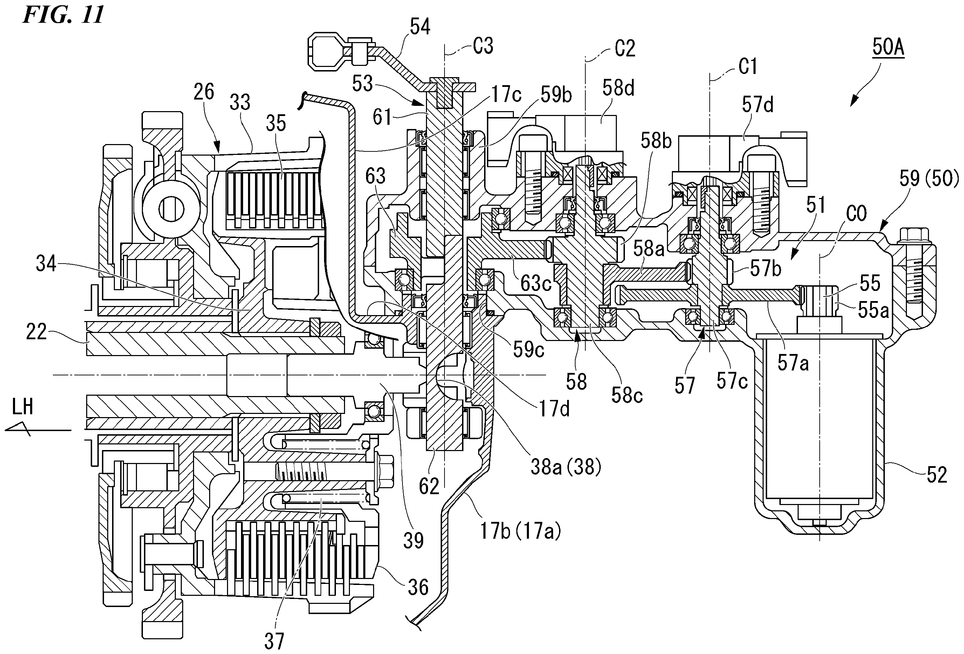

As shown in FIG. 2 and FIG. 11, the clutch apparatus 26 of the embodiment is a multi-plate clutch obtained by stacking a plurality of clutch plates 35 in the axial direction, and a wet clutch with an oil chamber disposed in the right cover 17a. The clutch apparatus 26 includes an outer clutch 33 driven by always transmitting the rotating power from the crankshaft 14, a clutch center 34 disposed in the outer clutch 33 and integrally rotatably supported by the main shaft 22, and the plurality of clutch plates 35 stacked between the outer clutch 33 and the clutch center 34 and configured to frictionally engage them.

A pressure plate 36 having substantially the same diameter as the clutch plates 35 is disposed on the right side of the stacked the clutch plates 35 (an outer side in the vehicle width direction). The pressure plate 36 is biased leftward by receiving an elastic load of a clutch spring 37, and the stacked clutch plates 35 are joined through pressure welding (frictional engagement). Accordingly, the clutch apparatus 26 is in a connection state in which power transmission is possible. The clutch apparatus 26 is a normally closed clutch that is in a connection state during a normal time when there is no input from the outside.

Release of the pressure welding (frictional engagement) is performed by an actuation of a release mechanism 38 inside the right cover 17a. The actuation of the release mechanism 38 is performed by at least one of the operation of the clutch lever 4b by the occupant and the application of a torque by the clutch actuator 50.

### <Release mechanism>

As shown in FIG. 2 and FIG. 11, the release mechanism 38 includes a lifter shaft 39 which is held so as to be reciprocally movable in the axial direction at inside of the right side portion of the main shaft 22, and the release shaft 53 which is disposed to be perpendicular to the lifter shaft 39 in the axial direction and which is held so as to be movable about an axial at an outer portion of the right cover 17a. Line C3 in the drawings designates a center axis of the release shaft 53 extending in an upward/downward direction. The release shaft 53 is inclined in the axial direction to be disposed further rearward as it goes upward in a vertical direction when seen in the axial direction of the main shaft 22 (when seen in a side view of the vehicle) (see FIG. 1). The upper section of the release shaft 53 protrudes outward from the right cover 17a, and a driven clutch lever 54 is integrally rotatably attached to the upper section of the release shaft 53. The driven clutch lever 54 is connected to the clutch lever 4b via an operation cable 54c.

An eccentric cam section 38a is provided in a lower section of the release shaft 53 located inside the right cover 17a. The eccentric cam section 38a is engaged with the right end portion of the lifter shaft 39. The release shaft 53 moves the lifter shaft 39 rightward according to an action of the eccentric cam section 38a through an axial rotation. The lifter shaft 39 is configured to make reciprocating movement integrally with the pressure plate 36 of the clutch apparatus 26. Accordingly, when the lifter shaft 39 is moved rightward, the pressure plate 36 is moved (lifted) rightward against the biasing force of the clutch spring 37, and frictional engagement between the stacked clutch plates 35 is released. Accordingly, the normally closed clutch apparatus 26 becomes in a disconnection state in which power transmission is not possible.

Further, the release mechanism 38 is not limited to the eccentric cam mechanism and may include a rack and pinion, a feed screw, or the like. A mechanism configured to connect the clutch lever 4b and the driven clutch lever 54 is not limited to the operation cable 54c and may include a rod, a link, or the like.

### <Clutch control mode>

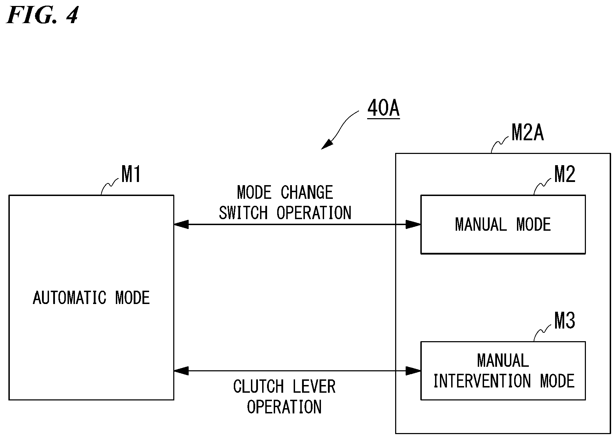

As shown in FIG. 4, a clutch control device 40A of the embodiment has three types of clutch control modes. The clutch control modes are appropriately transitioned between the three types of modes of an automatic mode M1 of performing automatic control, a manual mode M2 of performing a manual operation, and a manual intervention mode M3 of performing a temporary manual operation in accordance with operations of a clutch control mode change switch 49 and the clutch lever 4b (any one of which refers to FIG. 3). Further, the target including the manual mode M2 and the manual intervention mode M3 is referred to as a manual system M2A.

The automatic mode M1 is a mode of calculating a clutch capacity appropriate for a traveling state under automatic departure/gear shifting control and controlling the clutch apparatus 26. The manual mode M2 is a mode of calculating a clutch capacity according to a clutch operation instruction by the occupant and controlling the clutch apparatus 26. The manual intervention mode M3 is a temporary manual operation mode of receiving a clutch operation instruction from the occupant during the automatic mode M1, calculating the clutch capacity from the clutch operation instruction and controlling the clutch apparatus 26. Further, during the manual intervention mode M3, for example, it may be set to return to the automatic mode M1 when a state in which the occupant stops the operation of the clutch lever 4b (a completely released state) continues for a prescribed time.

For example, the clutch control device 40A starts the control from a clutch ON state (a connection state) in the automatic mode M1 upon starting up the system. In addition, the clutch control device 40A is set to return to the clutch ON in the automatic mode M1 upon stoppage of the engine 13 (upon system OFF). In the normally closed clutch apparatus 26, upon performing clutch ON, there is no need for supply of electric power to the motor 52 of the clutch actuator 50. Meanwhile, supply of the electric power to the motor 52 is maintained in the clutch OFF state (disconnection state) of the clutch apparatus 26.

In the automatic mode M1, it is basic to perform the clutch control automatically, and it is possible to travel the motorcycle 1 without lever operation. In the automatic mode M1, the clutch capacity is controlled based on the throttle opening, the engine rotational speed, the vehicle speed, the shift sensor output, and the like. Accordingly, it is possible to depart the motorcycle 1 only by the throttle operation without engine stall (meaning of engine stop or engine stall), and it is possible to shift gears only by the shift operation. In addition, in the automatic mode M1, when the occupant grips the clutch lever 4b, it is possible to switch to the manual intervention mode M3 and disconnect the clutch apparatus 26 arbitrarily.

Meanwhile, in the manual mode M2, the clutch capacity can be controlled according to the lever operation by the occupant (i.e., connection/disconnection of the clutch apparatus 26 is possible). The automatic mode M1 and the manual mode M2 can be switchable to each other by operating the clutch control mode change switch 49 (see FIG. 3), for example, during stoppage of the motorcycle 1 and neutral of the gearbox 21. Further, the clutch control device 40A may include an indicator showing a manual state upon transition to the manual system M2A (the manual mode M2 or the manual intervention mode M3).

In the manual mode M2, it is basic to perform the clutch control manually, and it is possible to control the clutch capacity according to a working angle of the clutch lever 4b (other words, a working angle of the release shaft 53). Accordingly, it is possible to control the connection/disconnection of the clutch apparatus 26 at the will of the occupant. Further, even in the manual mode M2, it is possible to intervene the clutch control automatically when the shift operation is performed with no clutch operation. Hereinafter, the working angle of the release shaft 53 is referred to as a release shaft working angle.

In the automatic mode M1, while the connection/disconnection of the clutch apparatus 26 is performed automatically by the clutch actuator 50, it is possible to temporarily intervene the manual operation in the automatic control of the clutch apparatus 26 by performing the manual clutch operation with respect to the clutch lever 4b (the manual intervention mode M3).

Referring also to FIG. 2, the clutch lever 4b is connected to the driven clutch lever 54, which is attached to the release shaft 53 of the clutch apparatus 26 via the operation cable 54c. The driven clutch lever 54 is attached to the upper end portion of the release shaft 53, which is protruding to the upper section of the right cover 17a, in a state they are integrally rotatable.

In addition, for example, the clutch control mode change switch 49 (see FIG. 3) is provided on the handle switch attached to the steering handle 4a. Accordingly, it is possible for the occupant to easily switch the clutch control mode during normally driving.

### <Clutch actuator>

As shown in FIG. 1, the clutch actuator 50 is attached to the rear upper section of the right cover 17a on the right side of the crank case 15.

Referring to FIG. 5 and FIG. 6 together, the clutch actuator 50 includes the motor 52, and the speed reducer 51 configured to transmit a driving force of the motor 52 to the release shaft 53.

The motor 52 is, for example, a DC motor, and disposed in parallel to, for example, the release shaft 53 in the axial direction. The motor 52 is disposed such that a driving shaft 55 protrudes upward.

In the embodiment, a plurality of (two) motors 52 are provided on a single clutch actuator 50. Hereinafter, the motor 52 located on the clutch actuator 50 on the front side of the vehicle is referred to as a first motor 521, and the motor 52 located on the rear side of the vehicle and the inner side in the vehicle width direction with respect to the first motor 521 is referred to as a second motor 522. Lines C01 and C02 in the drawings indicate center axes (driving axes) of the motors 521 and 522, respectively. For convenience of description, both of the motors 521 and 522 may be collectively referred to as the motor 52. In addition, both of the axes C01 and C02 may be collectively referred to as an axis C0.

The speed reducer 51 reduces the rotating power output from the motor 52 and transmits the reduced rotating power to the release shaft 53. The speed reducer 51 includes, for example, a gear row parallel to the release shaft 53 in the axial direction. The speed reducer 51 includes driving gears 55a provided integrally with the driving shafts 55 of the motors 521 and 522, a first reduction gear 57a with which each of the driving gears 55a is meshed with, a first small diameter gear 57b in coaxial with the first reduction gear 57a, a second reduction gear 58a with which the first small diameter gear 57b is meshed, a second small diameter gear 58b in coaxial with the second reduction gear 58a, a driven gear 63a with which the second small diameter gear 58b is meshed, and a gear case 59 configured to accommodate the gears.

The first reduction gear 57a and the first small diameter gear 57b are rotatably supported integrally with a first support shaft 57c, and constitute the first reduction shaft 57. The second reduction gear 58a and the second small diameter gear 58b are rotatably supported integrally with a second support shaft 58c, and constitute the second reduction shaft 58. The first support shaft 57c and the second support shaft 58c are rotatably supported by the gear case 59. The second reduction gear 58a is a fan-shaped gear about the second support shaft 58c, and provided to widen toward a front side of the second support shaft 58c and an outer side in the vehicle width direction. Line C1 in the drawings indicates a center axis of the first reduction shaft 57, and line C2 indicates a center axis of the second reduction shaft 58.

The driven gear 63a is rotatably provided integrally with the release shaft 53. The driven gear 63a is a fan-shaped gear about the release shaft 53, and provided to expand in front of the release shaft 53. A gear of the speed reducer 51 on a downstream side has a small rotation angle, and the second reduction gear 58a and the driven gear 63a can be used as a fan-shaped gear with a small rotation angle.

As a result, reduction in size of the speed reducer 51 and the clutch actuator 50 becomes possible. That is, even when a large-diameter reduction gear is installed to earn a reduction ratio, by cutting out the other parts than the meshing range of the reduction gear to form a fan shape, in particular, it is possible to suppress the speed reducer 51 from extending outward in the vehicle width direction and achieve reduction in weight of the speed reducer 51.

With this configuration, the motor 52 and the release shaft 53 can always be linked via the speed reducer 51. Accordingly, a system is configured to connect and disconnect the clutch apparatus 26 directly with the clutch actuator 50.

Each of the gears is a flat spur gear with a thickness reduced in the axial direction thickness, and the gear case 59 is also formed in a flat shape with a thickness reduced in the axial direction. Accordingly, the speed reducer 51 becomes less noticeable when seen in a side view of the vehicle. The first rotation angle sensor 57d and the second rotation angle sensor 58d which are connected to one end portions of the first reduction shaft 57 and the second reduction shaft 58, respectively, and configured to detect rotation angles thereof are provided in the gear case 59 on an upper surface side.

The motor 52 is disposed to protrude downward from a front section of the gear case 59. Accordingly, the motor 52 can be disposed forward avoiding a bulging portion 17b that covers the clutch apparatus 26 in the right cover 17a, and the clutch actuator 50 is suppressed from overhanging outward in the vehicle width direction.

Referring to FIG. 1 and FIG. 11, the right cover 17a defines a circular range coaxial with the clutch apparatus 26 when seen in a side view of the vehicle as the bulging portion 17b that bulges outward in the vehicle width direction. A cover concave section 17c is formed in an area facing a rear upper side in the bulging portion 17b by changing the outer side surface towards an inner side in the vehicle width direction with respect to the remaining part. A lower end portion of the cover concave section 17c is a step difference section 17d where an outer side surface of the bulging portion 17b is changed to a stepped shape. An upper section of the release shaft 53 protrudes upward and rearward diagonally from the step difference section 17d.

A driving force of the motor 52 is reduced between the driving gears 55a and the first reduction gear 57a, reduced between the first small diameter gear 57b and the second reduction gear 58a, further reduced between the second small diameter gear 58b and the driven gear 63a, and transmitted to the release shaft 53.

### <Release shaft>

As shown in FIG. 6 to FIG. 8, the release shaft 53 is divided into a plurality of elements so as to be rotatable by separately receiving the input from the clutch actuator 50 and the input by the operation of the occupant.

The release shaft 53 includes an upper section release shaft 61 that constitutes an upper section, a lower release shaft 62 that constitutes a lower section, and an intermediate release shaft 63 disposed to cross between a lower end portion of the upper section release shaft 61 and an upper end portion of the lower release shaft 62.

The upper section release shaft 61 forms a columnar shape, and is rotatably supported by an upper boss section 59b of the gear case 59. The upper section release shaft 61 has an upper end portion protruding on an outer side of the gear case 59, and the driven clutch lever 54 is integrally rotatably supported by the upper end portion. A return spring 54s, which is configured to apply a biasing force in a direction opposite to rotation by the operation of the clutch lever 4b (rotating in a clutch disconnection direction) to the driven clutch lever 54, is attached to the driven clutch lever 54.

The lower release shaft 62 forms a columnar shape, and a lower section is rotatably supported on an inner side of the right cover 17a. The eccentric cam section 38a of the release mechanism 38 is formed in the lower section of the lower release shaft 62 which is facing the inside of the gear case 59. A lower return spring 62s, which is configured to apply a biasing force in a direction opposite to rotation in the clutch disconnection direction to the lower release shaft 62, is attached to the lower end portion of the lower release shaft 62.

A manual operation-side cam 61b forming a fan-shaped cross section and extending in the axial direction is provided on the lower end portion of the upper section release shaft 61.

A clutch-side cam 62b forming a fan-shaped cross section and extending in the axial direction is provided on the upper end portion of the lower release shaft 62 within a range that avoids the manual operation-side cam 61b in the circumferential direction or in the axial direction.

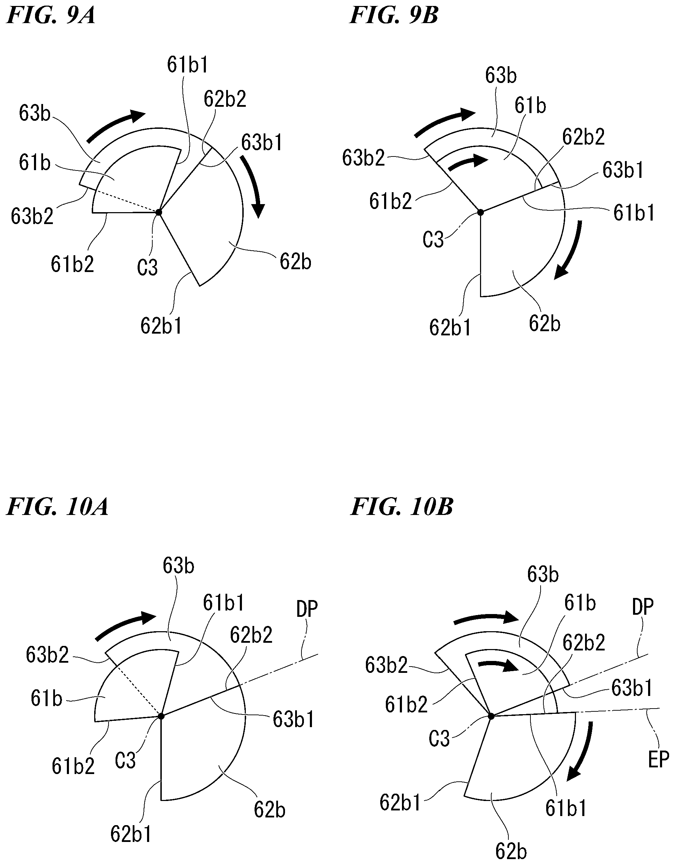

The lower end portion (the manual operation-side cam 61b) of the upper section release shaft 61 and the upper end portion (the clutch-side cam 62b) of the lower release shaft 62 overlap the positions in the axial direction with each other while avoiding each other in the circumferential direction (or overlap the positions in the circumferential direction with each other while avoiding each other in the axial direction). Accordingly, it is possible to press one side surface 61b 1 of the manual operation-side cam 61b in the circumferential direction against the other side surface 62b2 of the clutch-side cam 62b in the circumferential direction and to rotate the lower release shaft 62 (see FIG. 9B and FIG. 10B).

The other side surface 61b2 of the manual operation-side cam 61b in the circumferential direction and one side surface 62b 1 of the clutch-side cam 62b in the circumferential direction are separated from each other in the circumferential direction or the axial direction. Accordingly, when an input from the clutch actuator 50 is provided in the clutch-side cam 62b, the lower release shaft 62 can rotate independently from the upper section release shaft 61 (see FIG. 9A and FIG. 10A).

The intermediate release shaft 63 is formed in a cylindrical shape through which engaging portions (upper and lower shaft engaging portions) of the lower end portion of the upper section release shaft 61 and the upper end portion of the lower release shaft 62 can be inserted. The driven gear 63a is supported rotatably integrally with the intermediate release shaft 63. A control operation-side cam 63b forming a fan-shaped cross section and extending in the axial direction is provided on the intermediate release shaft 63.

The control operation-side cam 63b of the intermediate release shaft 63 and the clutch-side cam 62b of the lower release shaft 62 overlap the positions in the axial direction with each other while avoiding each other in the circumferential direction (or overlap the positions in the circumferential direction with each other while avoiding each other in the axial direction). Accordingly, it is possible to press one side surface 63b1 of the control operation-side cam 63b in the circumferential direction against the other side surface 62b2 of the clutch-side cam 62b in the circumferential direction and to rotate the lower release shaft 62.

In addition, the control operation-side cam 63b is disposed avoiding the manual operation-side cam 61b of the upper section release shaft 61 in the axial direction or the radial direction. Accordingly, when the input from the clutch actuator 50 is transmitted to the clutch-side cam 62b, the lower release shaft 62 can be rotated independently from the upper section release shaft 61. In addition, when there is a manual operation, the upper section release shaft 61 can be rotated independently from the intermediate release shaft 63 on the control side.

The other side surface 63b2 of the control operation-side cam 63b in the circumferential direction and the one side surface 62b1 of the clutch-side cam 62b in the circumferential direction are separated from each other in the circumferential direction. Accordingly, when an input from a manual operation-side cam 61b is provided in the clutch-side cam 62b, the lower release shaft 62 can be rotated independently from the intermediate release shaft 63.

Referring to FIG. 11, the clutch actuator 50 holds the upper section release shaft 61 and the intermediate release shaft 63 in the gear case 59 in a rotatable manner. The clutch actuator 50 constitutes an actuator unit 50A integrally including the upper section release shaft 61 and the intermediate release shaft 63.

The lower release shaft 62 is held on the right cover 17a in a rotatable manner. In the step difference section 17d of the cover concave section 17c of the right cover 17a, an opening section 17e through which an upper end portion of the lower release shaft 62 protrudes and a fastening section 17f of the gear case 59 is provided. An opening section 59c configured to cause the upper end portion of the lower release shaft 62 to face into the gear case 59 is provided in a portion of the gear case 59 facing the step difference section 17d of the cover concave section 17c.

In this configuration, when the actuator unit 50A is attached to the right cover 17a, the upper section release shaft 61, the intermediate release shaft 63 and the lower release shaft 62 are connected to each other to configure the release shaft 53 in a linear shape.

The power unit PU of the embodiment can be configured by replacing the right cover 17a and the release shaft 53 and retrofitting the actuator unit 50A with respect to a manual clutch type power unit operated by an operation of a driver without performing the connection/disconnection operation of the clutch apparatus 26 using the electric control. For this reason, the actuator unit 50A can also be attached to power units of different models, and the actuator unit 50A can be shared among multiple models to easily configure a semi-automatic gear shift system (an automatic clutch type gear shift system).

### <Clutch control>

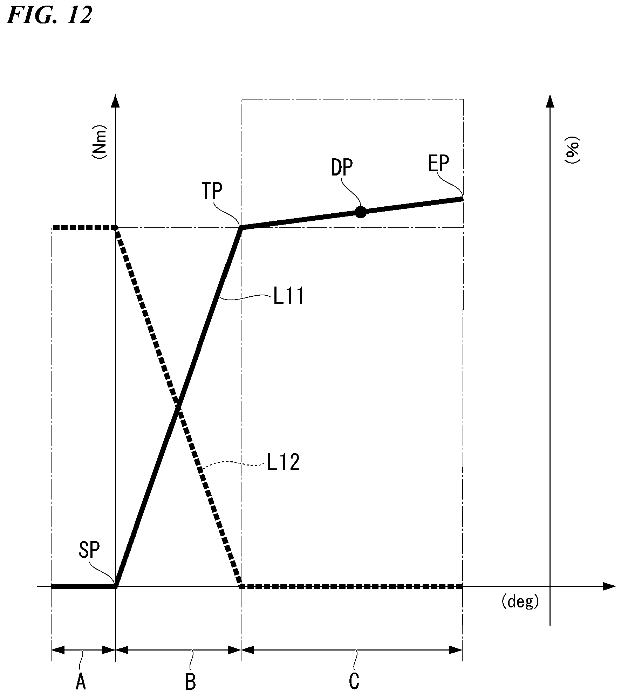

Next, clutch control of the embodiment will be described with reference to a graph of FIG. 12. The graph of FIG. 12 shows clutch characteristics in the automatic mode M1. In the graph of FIG. 12, a vertical axis indicates a torque (Nm) applied to the release shaft 53 and a clutch capacity (%), and a horizontal axis indicates a working angle (deg) of the release shaft 53.

A torque generated in the release shaft 53 corresponds to a torque value calculated by multiplying the torque value, which is obtained based on the supply current value to the motor 52 from a correlation between the supply current to the motor 52 and the torque generated by the motor 52, by a reduction ratio of the speed reducer 51. Hereinafter, the torque of the release shaft 53 is referred to as a release shaft torque. A correlation between the release shaft working angle and the release shaft torque is shown by a line L11 in the graph. A correlation between the release shaft working angle and the clutch capacity is shown by a line L12 in the graph. The line L11 is also a line showing an output value (a reference output value) of the clutch actuator 50 when the clutch apparatus 26 is connected and disconnected in a state in which there is no intervention of the manual operation.

In the automatic mode M1 of the normally closed clutch, when the release shaft torque (the motor output) is "0," there is no operation input to the clutch apparatus 26 (input toward a disconnection side), and the clutch capacity is 100 %. That is, the clutch apparatus 26 maintains a connection state. The state corresponds to a region A of the horizontal axis of FIG. 12. The region A is a play region of the driven clutch lever 54. In the region A, there is no motor output, and the release shaft torque changes at "0." In the region A, there is no actuation of the clutch apparatus 26, the clutch capacity changes at 100 %.

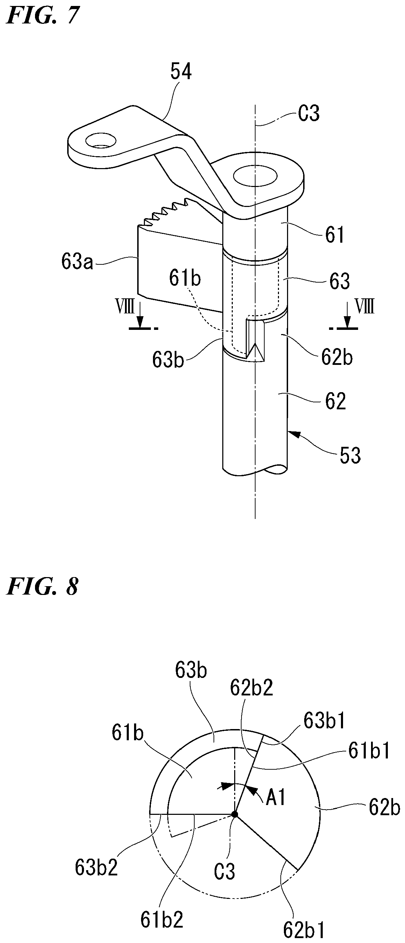

Referring also to FIG. 8, in the region A, the one side surface 61b 1 of the manual operation-side cam 61b of the release shaft 53 in the circumferential direction does not press the other side surface 62b2 of the clutch-side cam 62b in the circumferential direction, and is separated from the clutch-side cam 62b by a biasing force of the return spring 54s (shown by a dotted line in FIG. 8). In the region A, the driven clutch lever 54 is in a play state in which the manual operation-side cam 61b can approach and separate from the clutch-side cam 62b by an angle A1 in the drawings. For example, in the region A, the one side surface 63b 1 of the control operation-side cam 63b in the circumferential direction is abutting the other side surface 62b2 of the clutch-side cam 62b in the circumferential direction.

Referring to FIG. 12, when the release shaft working angle increases and passes the play region A, the release shaft working angle shifts to a half clutch region B.

Referring also to FIG. 9A, in the half clutch region B, the control operation-side cam 63b presses the clutch-side cam 62b and rotates the lower release shaft 62. When the release shaft torque increases, the release mechanism 38 lifts the clutch apparatus 26 and reduces a clutch capacity. That is, the clutch apparatus 26 becomes in a half-clutch state in which partial power transmission is possible. Reference sign SP in FIG. 12 indicates a starting position of an actuation of switching to the half clutch region B from the play region A (an actuation starting position). When the manual operation is intervened in the half clutch region B, the manual operation-side cam 61b abuts the clutch-side cam 62b and cooperates with the control operation-side cam 63b to rotate the lower release shaft 62 (see FIG. 9B).

When the release shaft working angle passes a touch point TP that is an ending point of the half clutch region B, an increase in release shaft torque is slower than that in a region B. A region after the touch point TP at the release shaft working angle is, for example, a clutch disconnection region C in which the clutch capacity remains equivalent to "0." The clutch disconnection region C is, for example, an actuation marginal region in which the release shaft 53 or the like actuates to a mechanical actuation limit position. In the clutch disconnection region C, the release shaft torque is slightly increased. The increment corresponds to an increment of a clutch spring load according to movement of lift parts of the clutch apparatus 26. Reference sign EP in FIG. 12 is a full lift position that is an ending point of the clutch disconnection region C.

For example, a standby position DP is set in the middle of the clutch disconnection region C. At the standby position DP, a slightly higher release shaft torque than the touch point TP where the clutch apparatus 26 starts the connection is applied. While torque transmission slightly occurs at the touch point TP due to an actuation error, torque transmission of the clutch apparatus 26 becomes completely disconnected by applying the release shaft torque to the standby position DP. In addition, a slight low release shaft torque with respect to a full lift position EP is applied at the standby position DP, and thus, it is possible to invalidate the clutch apparatus 26. That is, at the standby position DP, it is possible to cancel the backlash of each part and the actuation reaction force in the clutch apparatus 26, and to increase actuation responsiveness upon connection of the clutch apparatus 26.

Further, when the clutch apparatus 26 is actuated from the connection state toward a disconnection side, a point where the release shaft torque rises (a starting point of the half clutch region B) is an actuation starting position SP, and a point where the clutch apparatus 26 is completely disconnected (an ending point of the half clutch region B) is the touch point TP.

On the contrary, when the clutch apparatus 26 is actuated from the disconnection state toward a connection side, a point where the clutch apparatus 26 starts the connection is the touch point TP, and a point where the clutch apparatus 26 is completely connected is the actuation starting position SP.

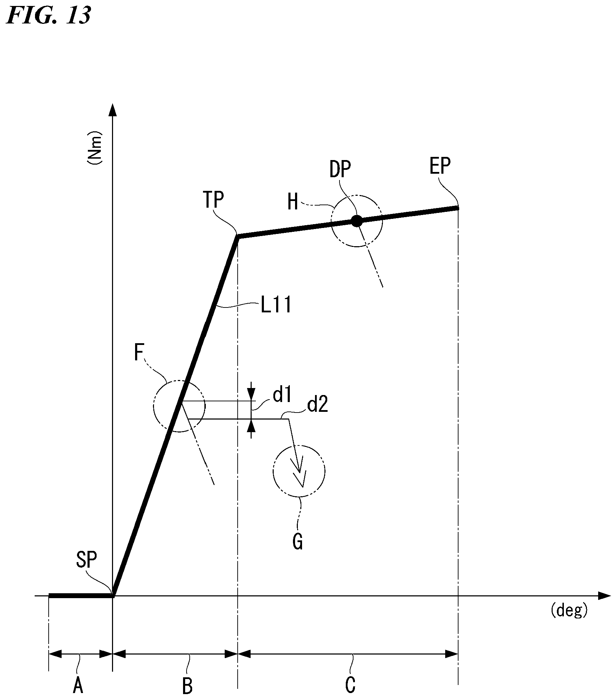

Referring to FIG. 13, in the half clutch region B, driving of the motor 52 is controlled based on the lift load.

In this control, first, a clutch spring load is previously set based on the repulsive force of the clutch spring 37. Next, a lift load app lied to the clutch apparatus 26 (an operation load against the clutch spring load) is estimated according to the release shaft torque. Then, a load obtained by reducing the lift load from the clutch spring load is a clutch pressing load applied to the clutch apparatus 26 in actuality.

The clutch capacity is obtained by "a clutch pressing load/clutch spring load." The supply electric power to the motor 52 is controlled such that the clutch capacity is a target value, and the release shaft torque and the lift load are controlled. A motor current value and a lever working angle at each of the actuation starting position SP and the touch point TP are set in advance to default values, or as described below, set by learning control upon ON or OFF of a power supply of the motorcycle 1.

As an example of a sensing configuration, a configuration in which the current sensor 40b is provided in the motor control device (the ECU 40), and the detection value is converted into the motor torque and further converted into the release shaft torque (clutch operation torque) is exemplified.

As shown in FIG. 13, in the half clutch region B, when there is an intervention of the operation (manual operation) of the clutch lever 4b, a measured value of the torque of the release shaft is reduced with respect to the correlation line L11 of the preset release shaft torque (see a portion F in the drawings). Here, when a decrement of the release shaft torque exceeds a predetermined threshold d1, it is determined that there is an intervention of the manual operation, and shifts to a predetermined manual operation intervention control.

In the manual operation intervention control, for example, the motor 52 is feedback-controlled so as to maintain a torque d2, which is a torque after the release shaft torque has reduced by the threshold d1, from detection of the manual operation intervention until the increment of the release shaft working angle becomes a predetermined angle or more. During the current control at this time, a current restriction according to the angle after the touch point TP is provided, and the motor output is substantially 0 on the way. Since the load at this time is substantially low, it is determined that there is a manual intervention. Accordingly, it is possible to suppress discomfort due to sudden disappearance of the torque from the motor 52 after the operation of the clutch lever 4b. After the increment of the release shaft working angle has become the prescribed angle or greater, by gradually reducing the release shaft torque (see a portion G in the drawings), it is possible to suppress electric power consumption by continuing to drive the motor 52 while suppressing the discomfort.

In the clutch disconnection region C, the driving of the motor 52 is controlled based on the lever position (angle).

As described above, in the clutch disconnection region C, the increase in release shaft torque associated with the lift of the clutch apparatus 26 is small. For this reason, in the clutch disconnection region C, the supply electric power to the motor 52 is controlled based on the release shaft working angle. Accordingly, after the touch point TP when the clutch apparatus 26 starts the connection, it is possible to control a disconnection amount of the clutch apparatus 26 more finely.

As an example of the sensing configuration, a configuration in which the first rotation angle sensor 57d and the second rotation angle sensor 58d are provided on the first reduction shaft 57 and the second reduction shaft 58, respectively, and these detection values are converted into release shaft working angles (clutch operation angles) can be exemplified. The first rotation angle sensor 57d and the second rotation angle sensor 58d are provided as a pair for fail, but only one of these may be used.

As shown in FIG. 13, in the clutch disconnection region C, when there is an intervention of the operation (manual operation) of the clutch lever 4b, a measured value of the release shaft torque is reduced with respect to the correlation line L11 of the preset release shaft torque (see a portion H in the drawings).

Referring also to FIG. 10A, for example, in the automatic mode M1, the torque applied to the clutch-side cam 62b by the control operation-side cam 63b is limited to the torque up to the standby position DP. The torque until the clutch-side cam 62b exceeds the standby position DP to reach the full lift position EP is a case when the manual operation that grips the clutch lever 4b is intervened, and a torque exceeding the standby position DP is applied from the manual operation-side cam 61b to the clutch-side cam 62b (see FIG. 10B). Here, the control operation-side cam 63b is separated from the clutch-side cam 62b, and the motor output is substantially 0.

Even before reaching the standby position DP, when the release shaft working angle is in the clutch disconnection region C beyond the touch point TP, the measured value of the release shaft torque is substantially 0 due to the intervention of the manual operation. Accordingly, in the clutch disconnection region C, when the measured value of the release shaft torque is changed to a range of substantially 0, it is determined that there is an intervention of the manual operation and shifts to the predetermined manual operation intervention control.

In the manual operation intervention control, for example, the motor output is maintained so that the release shaft working angle maintains the touch point TP, which that is substantially a clutch disconnection position until the increment of the release shaft working angle becomes the predetermined angle or more after the manual operation intervention has been detected. Accordingly, occurrence of an engine stall is suppressed even when the clutch lever 4b is abruptly released after the intervention of the manual operation.

In this way, more detailed clutch control (optimal control according to a state or characteristics of the clutch apparatus 26) can be performed by properly using the load (current) control and the position (angle) control according to the situation of the clutch apparatus 26.

In the embodiment, the release shaft working angle (the rotation angle of the gear shaft of the speed reducer 51) is detected, a control in which weighting of the current value is increased is performed in the region to the touch point TP that is preset (or learned) (the half clutch region B), and a control in which weighting of the working angle is increased is performed in the region after the touch point TP (the clutch disconnection region C).

In addition, in the embodiment, a change of the current value (conversion to the torque value) of the motor 52 with respect to the release shaft working angle is learned (updated) at a predetermined timing, and the target value according to the situation of the clutch apparatus 26 is set. The driving of the motor 52 is feedback-controlled based on the target value and the detection value of the current sensor 40b of the ECU 40.

### <Clutch capacity control>

Next, a major part of the clutch control of the embodiment will be described.

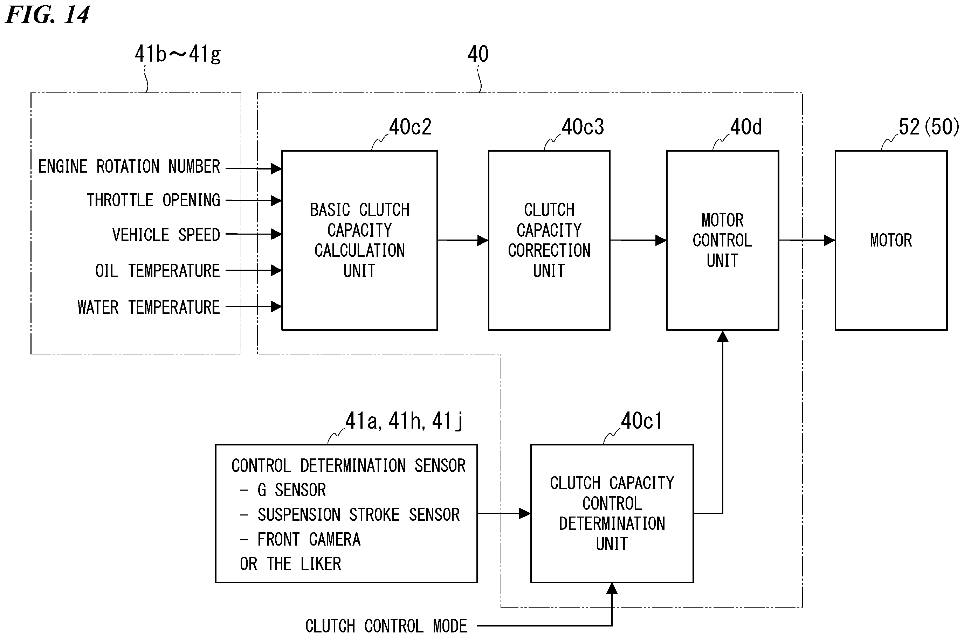

FIG. 14 is a block diagram schematically showing the clutch control device 40A.

The ECU 40 is configured as a single or a plurality of electronic control devices. The ECU 40 may be at least partially realized by cooperation of software and hardware.

The ECU 40 includes a clutch capacity control determination unit 40c1, a basic clutch capacity calculation unit 40c2, a clutch capacity correction unit 40c3, and a motor control unit 40d.

The clutch capacity control determination unit 40c1 receives information of the current clutch control mode, and receives detection information of a vehicle body behavior sensor 43 and an external sensor 45, which will be described below. The clutch capacity control determination unit 40c1 determines whether the vehicle is in a prescribed traveling state accompanied by a vehicle body behavior of a predetermined threshold or more based on detection information of at least one of the vehicle body behavior sensor 43 and the external sensor 45. For example, when traveling on a rough road with a rough road surface, a transmission torque (clutch torque) of the clutch apparatus fluctuates significantly. Here, by appropriately controlling the clutch capacity according to the road surface situation or the like, it is possible to reduce discomfort such as a shock or clutch sliding due to fluctuations of the clutch torque.

The basic clutch capacity calculation unit 40c2 sets (calculates) a basic clutch capacity, which is a base value of the clutch capacity control, such that, for example, a slip (clutch slip) of the clutch apparatus 26 is less than the predetermined value. The basic clutch capacity is calculated from a map using an engine rotational speed, a throttle opening, and an engine torque estimation value (for example, see FIG. 7 in Japanese Unexamined Patent Application, First Publication No. 2009-243630).

The clutch capacity correction unit 40c3 corrects a target value of the clutch capacity based on the basic clutch capacity set by the basic clutch capacity calculation unit 40c2.

The motor control unit 40d drives the motor 52 of the clutch actuator 50 and controls the clutch capacity based on the target value corrected by the clutch capacity correction unit 40c3.

A vehicle status sensor 42 includes, for example, an acceleration sensor 41a, a gear position sensor 41b, a shift load sensor 41c, a throttle opening sensor 41d, a vehicle speed sensor 41e, an engine rotational speed sensor 41f, an engine temperature sensor 41g, and a suspension stroke sensor 41h. Among these, the acceleration sensor 41a and the suspension stroke sensor 41h may be referred to as the vehicle body behavior sensor 43.

The acceleration sensor 41a is an inertial measurement unit (IMU) having five axes or six axes, detects an angular velocity and acceleration of three axes (a roll axis, a pitch axis, and a yaw axis) in the vehicle body, and further, detects of angles of three axes of the vehicle body from the result.

The suspension stroke sensor 41h detects operation quantities of front and rear suspensions (stroke amounts of front and rear wheels). For example, detection information of the suspension stroke sensor 41h may be provided for active control or the like of the front and rear suspensions.

The external sensor 45 is a digital camera configured to detect a situation around the vehicle using a solid stage image sensor such as a charge coupled device (CCD), a complementary metal oxide semiconductor (CMOS), or the like. The camera can repeatedly image a side in front of the vehicle at a predetermined control period, and detect a road surface situation, a substance, and the like, in front of the vehicle. The camera may image not only visible light but also invisible light such as infrared light or the like. The external sensor 45 may be not only an optical sensor such as a camera or the like but also a radio wave sensor such as radar or the like using a micro-wave such as infrared light, a millimeter wave, or the like, or a configuration in which a camera and radar are used together. The detection information of the external sensor 45 may be provided for driving assistance control, automatic driving control, and the like, of the vehicle.

In the clutch capacity control of the embodiment, when it is expected that a large fluctuation occurs in the clutch torque, the clutch capacity is decreased. That is, when it is expected that a predetermined fluctuation or more occurs in the clutch torque, for example, when the motorcycle 1 travels on the rough road, sliding (clutch slip) can be generated in the clutch apparatus 26. The clutch slip corresponds to a rotation difference (clutch differential rotation) between the output and the input of the clutch apparatus 26.

Due to occurrence of the clutch slip, it is possible to suppress occurrence of the vehicle body behavior as well as the shock to the driver, the power unit, or the like, by the load input from the road surface to the driving wheel (rear wheel). In addition, by releasing the back torque applied to the clutch apparatus 26 and suppressing the engine brake, it is possible to suppress deterioration in grounding property (rear wheel grounding property) of the rear wheel 12. With this control, it is possible to generate the clutch slip with a smaller back torque than in a mechanical back torque limiter. Accordingly, even when the grounding load of the rear wheel is low or the road surface situation is easy to slide, a rear wheel grounding property can be improved.

Here, when the release mechanism is configured to push and pull the lifter shaft and the clutch capacity can be increased by driving the clutch actuator, control of increasing the clutch capacity according to the road surface situation or the like becomes possible. In addition, when the clutch apparatus is a normally open clutch, control of increasing the clutch capacity in the same way becomes possible as long as the clutch capacity is increased by driving the clutch actuator. Alternatively, when the clutch capacity is controlled to be reduced, control of restricting a decrement becomes possible.

In this way, when the clutch capacity is increased (or the decrement is restricted), it is possible to suppress the clutch slip and secure direct controllability. Accordingly, when the vehicle body attitude is recovered by the accelerator operation or when the rear wheel is slid, it is possible to contribute to improvement of manageability of the vehicle body.

With the above-mentioned control, it is possible to appropriately control the clutch capacity according to the road surface situation or the like, and reduce the discomfort caused by the shock or clutch sliding due to fluctuation of the clutch torque.

The above-mentioned control can be performed not only due to the road surface situation but also even when the fluctuation of the clutch torque caused by, for example, the accelerator operation, the gear shifting operation, or the like, is detected.

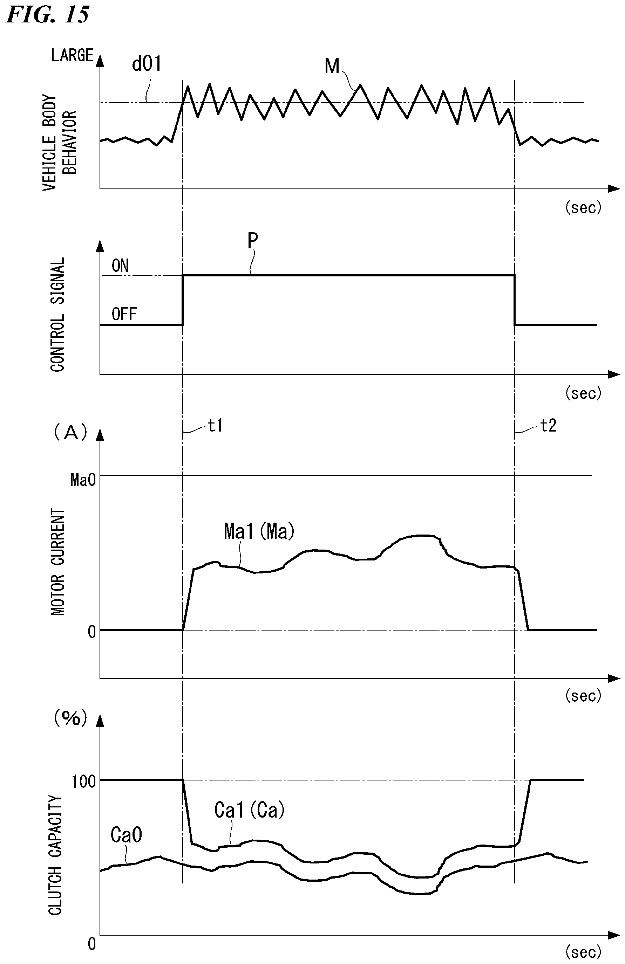

FIG. 15 is a time chart showing variations in vehicle body behavior, control signal, motor current and clutch capacity during the clutch capacity control. A first stage in the drawing indicates a measured value or a predictive value of a vehicle body behavior M by the control determination sensor, a second stage in the drawing indicates ON/OFF of a control signal P, a third stage in the drawing indicates a temporal change of a motor current Ma, and a fourth stage in the drawing indicates a temporal change of a clutch capacity Ca.

The ECU 40 does not perform the clutch capacity control when the clutch control mode is in the manual system M2A (the manual mode M2 or the manual intervention mode M3). The ECU 40 performs the clutch capacity control only when the clutch control mode is in the automatic mode M1.

Referring also to FIG. 14, the clutch capacity control determination unit 40c1 of the ECU 40 repeatedly performs the following control at a predetermined control period. That is, whether the clutch capacity control is required is determined based on whether the current clutch control mode is in the manual system M2A and whether the motorcycle 1 is in the predetermined prescribed traveling state.

When "required" is determined, the clutch capacity control is started (timing 11). The clutch capacity control is continued until the determination becomes "not required" (timing t2). That is, a range between the timing t1 and the timing t2 is range in which the clutch capacity control is performed, and the control signal becomes ON within the range.

In the determination of whether the clutch capacity control is required, the acceleration sensor 41a, the suspension stroke sensor 41h, the external sensor 45, and the like, are used as control determination sensors. The clutch capacity control determination unit 40c1 performs clutch capacity control of decreasing the clutch capacity when it is detected that the motorcycle 1 is in a prescribed traveling state accompanied by the vehicle body behavior (including actual measurement and prediction) of the prescribed level or more based on the detection information of the control determination sensor. The clutch capacity control determination unit 40c1 starts the clutch capacity control when a magnitude of the detection value of the control determination sensor is a threshold d01 or more (the timing 11). The clutch capacity control determination unit 40c1 terminates the clutch capacity control, for example, when the magnitude of the detection value of the control determination sensor becomes less than the threshold d01 (the timing t2) and after a prescribed standby time has lapsed.

In the clutch capacity control, the basic clutch capacity calculation unit 40c2 of the ECU 40 calculates the basic clutch capacity based on the detection information of the vehicle status sensor 42 such as an engine rotational speed, a throttle opening, a vehicle speed, an oil temperature, a water temperature, and the like.

Referring to FIG. 15, a basic clutch capacity Ca0 is a value lower than a maximum clutch capacity (100 %). The basic clutch capacity Ca0 is appropriately increased or decreased according to the fluctuation of the parameter. The basic clutch capacity Ca0 may be continuously calculated before and after the clutch capacity control.

Referring also to FIG. 14, in the clutch capacity control, the clutch capacity correction unit 40c3 of the ECU 40 calculates a correction clutch capacity Ca1. The correction clutch capacity Ca1 is calculated, for example, as a value obtained by multiplying the basic clutch capacity Ca0 by the predetermined coefficient (ratio).

The inclination of the graph in the timing t1 and the timing t2 is the slope caused by a mechanical moving time from the actual driving instruction to the start of the power transmission, and can be appropriately changed by the driving mechanism and the control.

The motor control unit 40d of the ECU 40 controls the motor current of the clutch actuator 50 based on the correction the clutch capacity Ca0. The motor current Ma1 during the clutch capacity control is increased or decreased to be symmetrical to the increase or decrease of the correction clutch capacity Ca1. The motor current Ma1 during the clutch capacity control is set between the motor current (0 in the normally closed clutch) when the clutch capacity is 100 % and the motor current Ma0 when the clutch capacity is 0 %.

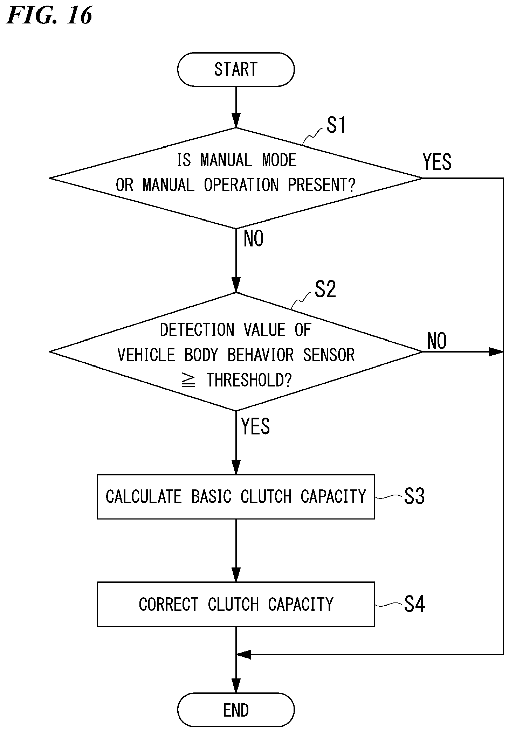

Hereinafter, the processing including the clutch capacity control will be described with reference to the flowchart of FIG. 16. The processing is repeatedly executed at a predetermined period when the power supply is ON (a main switch of the motorcycle 1 is ON).

First, in step S1, it is determined whether the current clutch control mode is in the manual system M2A (the manual mode M2 or the manual intervention mode M3). In other words, it is determined whether a mode is performed prior to the manual operation or the manual operation is being performed. In the case of NO (not in the manual system) in step S1, the processing shifts to step S2. In the case of YES (in the manual system) in step S1, the processing is terminated once.

In step S2, for example, it is determined whether the motorcycle 1 is in the predetermined prescribed traveling state based on the detection information of the vehicle body behavior sensor 43. The determination is performed based on whether the detection value of the vehicle body behavior sensor 43 is greater than the predetermined threshold. In the case of YES (the threshold or more) in step S2, the processing shifts to step S3. In the case of NO (less than the threshold) in step S2, the processing is terminated once.

In step S3, the basic clutch capacity Ca0 is calculated. Next, in step S4, for example, the correction clutch capacity Ca1 is calculated by multiplying the basic clutch capacity Ca0 by 1.2. While the coefficient to be multiplied by the basic clutch capacity Ca0 may be a constant having a range of about 1.2 times to 1.5 times, it may be a variable. Then, in step S5, the motor current Ma1 during the clutch capacity control is controlled based on the correction clutch capacity Ca1.

As described above, the clutch control device 40A according to the embodiment includes the clutch apparatus 26 configured to connect and disconnect power transmission between the engine 13 and the gearbox 21, the clutch actuator 50 configured to output a driving force to actuate the clutch apparatus 26, and the ECU 40 configured to drive the clutch actuator 50, and the ECU 40 performs clutch capacity control of fluctuating the clutch capacity Ca when it is detected that the motorcycle 1 is in the prescribed traveling state accompanied by the vehicle body behavior M of the

According to the configuration, when the motorcycle 1 is in a traveling state with a large vehicle body behavior, for example, when the motorcycle 1 on which the clutch control device 40A is mounted travels on the rough road, the following effects are provided. That is, the clutch capacity Ca is fluctuated (increased or decreased) according to the traveling state of the motorcycle 1, and the clutch capacity Ca can be appropriately controlled according to the road surface situation or the like.

Accordingly, it is possible to reduce discomfort such as a shock or clutch sliding due to the fluctuation of the clutch torque.

In addition, in the clutch control device 40A, the ECU 40 detects that the motorcycle 1 is in the prescribed traveling state based on the detection information of at least one of the vehicle body behavior sensor 43 and the external sensor 45 mounted in the motorcycle 1.

According to the configuration, it is possible to more accurately detect that the motorcycle 1 is in the prescribed traveling state using the detection information of at least one of the vehicle body behavior sensor 43 and the external sensor 45.

In addition, in the clutch control device 40A, the clutch capacity control is performed to reduce the clutch capacity Ca, and the clutch capacity Ca is set to exceed the predetermined basic clutch capacity Ca0.

According to the configuration, in the control of decreasing the clutch capacity Ca, for example, the basic clutch capacity Ca0 is set such that the clutch slip is less than a predetermined level, the clutch capacity Ca is decreased within a range exceeding the basic clutch capacity Ca0, and thus, occurrence of an excessive clutch slip can be suppressed.

In addition, in the clutch control device 40A, the manual operation of the clutch apparatus 26 by the driver's operation becomes possible, and the ECU 40 does not perform the clutch capacity control when the manual operation is performed or when it is in a mode that prioritizes the manual operation.

According to the configuration, the control is not intervened when the driver intentionally operates the clutch by prioritizing the clutch operation (manual operation) of the driver over the clutch capacity control. Accordingly, the clutch capacity Ca can be controlled accurately by the manual operation without giving the discomfort to the clutch operation of the driver.

Further, the present invention is not limited to the above-mentioned example, and for example, the clutch operator is not limited to the clutch lever 4b and may be various operators such as a clutch pedal or others. The clutch apparatus is not limited as being disposed between the engine and the gearbox, and may be disposed between the prime mover and an arbitrary output target other than the gearbox. The prime mover is not limited to an internal combustion engine and may also be an electric motor.

Like the embodiment, it is not limited to the application to the saddle riding vehicle in which the clutch operation is automated, and can also be applied to a saddle riding vehicle including a so-called clutchless transmission in which gear shifting can be performed by adjusting a driving force without performing a manual clutch operation under a predetermined condition while setting the manual clutch operation to basic.

In addition, all vehicles on which a driver rides on the vehicle body are included as the saddle riding vehicle, and in addition to a motorcycle (including a motorized bicycle and a scooter-type vehicle), a three-wheeled vehicle (including a two-front-wheeled and one-rear-wheeled vehicle in addition to one-front-wheeled and two-rear-wheeled vehicle) or a four-wheeled vehicle may also be included, and a vehicle in which an electric motor is included in a prime mover may also be included.

Then, the configuration in the embodiment is an example of the present invention, and various modifications may be made without departing from the scope of the present invention.

While preferred embodiments of the invention have been described and illustrated above, it should be understood that these are exemplary of the invention and are not to be considered as limiting. Additions, omissions, substitutions, and other modifications can be made without departing from the scope of the present claims.

Accordingly, the invention is not to be considered as being limited by the foregoing description, and is only limited by the scope of the appended claims.

## Claims

1. A clutch control device comprising:
a clutch apparatus (26) configured to connect and disconnect power transmission between a prime mover (13) and an output target (21);
a clutch actuator (50) configured to output a driving force to actuate the clutch apparatus (26); and
a control unit (40) configured to drive the clutch actuator (50),
wherein the control unit (40) includes a clutch capacity control determination unit (40c1), a clutch capacity correction unit (40c3) and a motor control unit (40d),
wherein, during an automatic mode (M1) which is a mode that calculates a clutch capacity appropriate for a traveling state of a vehicle (1) under automatic departure/gear shifting control and that controls the clutch apparatus (26), the clutch capacity control determination unit (40c1) starts clutch capacity control of fluctuating a clutch capacity (Ca) within a range from complete fastening to complete separation when it is detected that the vehicle (1) is in a prescribed traveling state accompanied by a vehicle body behavior (M) of a predetermined threshold (d01) or more, and
wherein the clutch capacity (Ca) is controlled according to a road surface situation, in such a way that the clutch apparatus (26) torque fluctuates, being increased or decreased, when traveling on a rough road according to the rough road surface, and
wherein the clutch capacity control during the prescribed traveling state is performed by the motor control unit (40d) which controls a motor current of the clutch actuator (50) based on a correction clutch capacity (Ca1) calculated by the clutch capacity correction unit (40c3).

2. The clutch control device according to claim 1, wherein the clutch capacity control determination unit (40c1) detects that the vehicle (1) is in the prescribed traveling state based on detection information of at least one of a vehicle body behavior sensor (43) and an external sensor (45) mounted on the vehicle (1).

3. The clutch control device according to claim 1 or 2, wherein the clutch capacity (Ca) is a capacity exceeding a basic clutch capacity (Ca0), and
the clutch capacity control decreases the clutch capacity (Ca) to a range that is not less than the basic clutch capacity (Ca0).

4. The clutch control device according to claim 3, wherein the clutch capacity (Ca) decreased under the clutch capacity control is calculated as the correction clutch capacity (Ca1) by multiplying the basic clutch capacity (Ca0) by a predetermined coefficient.

5. The clutch control device according to any one of claims 1 to 4, wherein a manual operation of the clutch apparatus (26) by a driver's operation becomes possible and
the control unit (40) does not perform the clutch capacity control when the manual operation is performed or when in a mode that prioritizes the manual operation.

## Patentansprüche

1. Ein Kupplungssteuergerät mit:
einer Kupplungsvorrichtung (26) zum Verbinden und Trennen der Kraftübertragung zwischen einer Antriebsmaschine (13) und einem Ausgabeziel (21);
einem Kupplungsaktuator (50) zum Ausgeben einer Antriebskraft, um die Kupplungsvorrichtung (26) zu betätigen; sowie
einer Steuerung (40) zum Antreiben des Kupplungsaktuators (50),
wobei die Steuerung (40) eine Einheit zur Bestimmung der Kupplungsleistungssteuerung (40c1), eine Einheit zur Korrektur der Kupplungsleistung (40c3) und eine Motorsteuereinheit (40d) aufweist,
wobei in einem Automatikmodus (M1), welcher einen Modus darstellt, der eine für einen Fahrzustand eines Fahrzeugs (1) unter automatischer Start-/Schaltsteuerung geeignete Kupplungsleistung berechnet und der die Kupplungsvorrichtung (26) steuert, die Einheit zur Bestimmung der Kupplungsleistungssteuerung (40c1) mit der Kupplungsleistungssteuerung zum Variieren einer Kupplungsleistung (Ca) in einem Bereich von vollständiger Feststellung bis zu vollständiger Trennung beginnt, wenn erfasst wird, dass sich das Fahrzeug (1) in einem vorgegebenen Fahrzustand befindet, der mit einem Karosserieverhalten (M) eines vorbestimmten Grenzwerts (d01) oder mehr einhergeht, und
wobei die Kupplungsleistung (Ca) gemäß einer Straßenoberflächensituation derart gesteuert wird, dass das Drehmoment der Kupplungsvorrichtung (26) bei der Fahrt auf einer unebenen Straße entsprechend dem unebenen Straßenbelag variiert, indem es erhöht oder verringert wird, sowie
wobei die Kupplungsleistungssteuerung im vorgegebenen Fahrzustand durch die Motorsteuereinheit (40d) erfolgt, die einen Motorstrom des Kupplungsaktuators (50) anhand einer von der Einheit zur Korrektur der Kupplungsleistung (40c3) berechneten Korrekturkupplungsleistung (Ca1) steuert.

2. Das Kupplungssteuergerät nach Anspruch 1, wobei die Einheit zur Bestimmung der Kupplungsleistungssteuerung (40c1) anhand von Erfassungsinformationen von mindestens einem Sensor für das Karosserieverhalten (43) und/oder einem am Fahrzeug (1) angebrachten externen Sensor (45) erfasst, dass sich das Fahrzeug (1) in dem vorgegebenen Fahrzustand befindet.

3. Das Kupplungssteuergerät nach Anspruch 1 oder 2, wobei die Kupplungsleistung (Ca) eine Leistung darstellt, die eine Grundleistung der Kupplung (Ca0) überschreitet, und
die Kupplungsleistungssteuerung die Kupplungsleistung (Ca) auf einen Bereich verringert, der nicht weniger als die Grundleistung der Kupplung (Ca0) beträgt.

4. Das Kupplungssteuergerät nach Anspruch 3, wobei die unter der Kupplungsleistungssteuerung verringerte Kupplungsleistung (Ca) als die Korrekturkupplungsleistung (Ca1) berechnet wird, indem die Grundleistung der Kupplung (Ca0) mit einem vorbestimmten Koeffizienten multipliziert wird.

5. Das Kupplungssteuergerät nach einem der Ansprüche 1 bis 4, wobei eine manuelle Betätigung der Kupplungsvorrichtung (26) durch die Betätigung eines Fahrers möglich wird, und
die Steuereinheit (40) die Kupplungsleistungssteuerung nicht ausführt, wenn die manuelle Betätigung ausgeführt wird oder wenn sie sich in einem Modus befindet, der die manuelle Betätigung priorisiert.

## Revendications

1. Dispositif de commande d'embrayage comprenant :
un appareil d'embrayage (26) configuré pour connecter et déconnecter la transmission de puissance entre un moteur primaire (13) et une cible de sortie (21) ;
un actionneur d'embrayage (50) configuré pour délivrer une force motrice pour actionner l'appareil d'embrayage (26) ; et
une unité de commande (40) configurée pour entraîner l'actionneur d'embrayage (50),
dans lequel l'unité de commande (40) comprend une unité de détermination de commande de capacité d'embrayage (40c1), une unité de correction de capacité d'embrayage (40c3) et une unité de commande de moteur (40d),
dans lequel, pendant un mode automatique (M1) qui est un mode qui calcule une capacité d'embrayage appropriée à un état de déplacement d'un véhicule (1) sous commande de départ/changement de vitesse automatique et qui commande l'appareil d'embrayage (26), l'unité de détermination de commande de capacité d'embrayage (40c1) démarre la commande de capacité d'embrayage consistant à faire fluctuer une capacité d'embrayage (Ca) dans une plage allant de la fixation complète à la séparation complète lorsqu'il est détecté que le véhicule (1) est dans un état de déplacement prédéfini accompagné d'un comportement de carrosserie de véhicule (M) d'un seuil prédéterminé (d01) ou plus, et
dans lequel la capacité d'embrayage (Ca) est commandée en fonction d'une situation de surface de route, de telle sorte que le couple de l'appareil d'embrayage (26) fluctue, en augmentant ou en diminuant, lors d'un déplacement sur une route accidentée en fonction de la surface de la route accidentée, et
dans lequel la commande de capacité d'embrayage pendant l'état de déplacement prédéfini est effectuée par l'unité de commande de moteur (40d) qui commande un courant moteur de l'actionneur d'embrayage (50) sur la base d'une capacité d'embrayage de correction (Ca1) calculée par l'unité de correction de capacité d'embrayage (40c3).

2. Dispositif de commande d'embrayage selon la revendication 1, dans lequel l'unité de détermination de commande de capacité d'embrayage (40c1) détecte que le véhicule (1) est dans l'état de déplacement prédéfini sur la base d'informations de détection d'au moins un parmi un capteur de comportement de carrosserie de véhicule (43) et un capteur externe (45) monté sur le véhicule (1).

3. Dispositif de commande d'embrayage selon la revendication 1 ou 2, dans lequel la capacité d'embrayage (Ca) est une capacité dépassant une capacité d'embrayage de base (Ca0), et
la commande de capacité d'embrayage diminue la capacité d'embrayage (Ca) jusqu'à une plage qui n'est pas inférieure à la capacité d'embrayage de base (Ca0).

4. Dispositif de commande d'embrayage selon la revendication 3, dans lequel la capacité d'embrayage (Ca) diminuée sous la commande de capacité d'embrayage est calculée en tant que capacité d'embrayage de correction (Ca1) en multipliant la capacité d'embrayage de base (Ca0) par un coefficient prédéterminé.

5. Dispositif de commande d'embrayage selon l'une quelconque des revendications 1 à 4, dans lequel une opération manuelle de l'appareil d'embrayage (26) par une opération du conducteur devient possible et
l'unité de commande (40) n'effectue pas la commande de capacité d'embrayage lorsque l'opération manuelle est effectuée ou lorsqu'elle se trouve dans un mode qui donne la priorité à l'opération manuelle.
